# EUROPEAN PATENT SPECIFICATION

(11) **EP 0 881 753 B1**
(45) Date of publication and mention of the grant of the patent: **13.02.2002**
(21) Application number: 98109579.7
(22) Date of filing: 26.05.1998
(51) Int. Cl.: H02K 9/06, H02K 3/24, H02K 19/22

(54) **Cooling arrangement of alternator**
Anordnung zum Kühlen von Wechselstromgeneratoren
Système de refroidissement pour alternateur

(30) Priority: 26.05.1997 WO PCT/JP97/01778; 22.09.1997 WO PCT/JP97/03374; 26.09.1997 JP 27975097; 26.09.1997 JP 27975197; 26.09.1997 JP 27975297; 14.10.1997 JP 29788297; 24.10.1997 JP 30973197; 10.12.1997 JP 36206397; 10.02.1998 JP 4439098; 13.02.1998 JP 4903998
(43) Date of publication of application: 02.12.1998
(73) Proprietor: Denso Corporation, Kariya-city, Aichi-pref., 448-8661 (JP)
(72) Inventor: Umeda, Atsushi, Kariya-city, Aichi-pref., 448-8661 (JP); Shiga, Tsutomu, Kariya-city, Aichi-pref., 448-8661 (JP); Kusase, Shin, Kariya-city, Aichi-pref., 448-8661 (JP)
(74) Representative: Winter, Brandl, Fürniss, Hübner, Röss, Kaiser, Polte Partnerschaft

(56) References cited:
- EP-A- 0 671 801
- DE-A- 4 031 276
- PATENT ABSTRACTS OF JAPAN vol. 095, no. 005, 30 June 1995 -& JP 07 046795 A (NIPPONDENSO CO LTD), 14 February 1995
- PATENT ABSTRACTS OF JAPAN vol. 009, no. 010 (E-290), 17 January 1985 -& JP 59 159638 A (NIPPON DENSO KK), 10 September 1984

## Description

### BACKGROUND OF THE INVENTION

### 1. Field of the Invention

The present invention relates to an alternator driven by an internal combustion engine for a passenger car, a truck or a boat.

### 2. Description of the Related Art

Recently, installation of various safety control systems have necessitated increase in the output power of an alternator. On the other hand, as engine noises have been reduced to comply with the social demand for noise reduction of vehicles, noises of an engine accessories such as an alternator has come into prominence.

Noises of the alternator are mainly caused by cooling air blowing on uneven coil-end groups or portions of the stator winding.

JP-A-59-159638 discloses an alternator which has a rotor with cooling fans and a stator with multi-phase stator winding wound by a continuous wire. The stator winding has flattened coil-end groups to increase surface to be cooled by cooling-air-blow.

However, coil-end groups of the multi-phase stator winding wound by a continuous wire are necessarily formed uneven because each phase winding interfere with each other in the circumference thereof. Thus, cooling air blows on the uneven inside structure, thereby generating noises.

WO92/06527 discloses an alternator in which U-shaped conductors having a U-turn portion are inserted into respective slots of a stator core from a certain direction. Each of the ends opposite the U-turn portion of the U-shaped conductors are, thereafter, connected to form a stator winding. Thus, the stator winding has a coil-end group including the U-turn portions and a coil-end group including the joint portions. The U-shaped conductors are disposed even in the slots, and the space factor of the conductors in the slot becomes high and the output power can be increased.

While the coil-end group having the U-turn portions conductors form even air-passages, the coil end groups having joint portions form walls on which cooling air blows on to increase noise. However, no specific cooling structure to reduce noises is shown therein.

### SUMMARY OF THE INVENTION

The present invention, in view of the above problems, is to provide an improved alternator for a vehicle which can increase output power without increasing noises.

In order to attain the above object, stator winding of an alternator according to the present invention includes a first coil-end group having a plurality of U-turn portions disposed at an end of a stator core and a second coil-end group having a plurality of joint portions disposed at the other end of the stator core, a cooling member for sending cool air to the second coil-end group less than the first coil-end group, thereby suppressing air-blow noises.

It is also desirable that the first fan for cooling the first coil-end group is a centrifugal fan, and the second cooling fan for cooling the second coil-end group is a mixed-flow fan.

This object is achieved by an alternator comprising the features of independent claims 1 and 8.

### BRIEF DESCRIPTION OF THE DRAWINGS

Other objects, features and characteristics of the present invention as well as the functions of related parts of the present invention will become clear from a study of the following detailed description, the appended claims and the drawings. In the drawings:
Fig. 1 is a cross-sectional view illustrating an alternator for a vehicle according to a preferred embodiment;
Fig. 2 is a plan view of a stator according to the embodiment;
Fig. 3 is a perspective view illustrating a conductor segment according to the embodiment;
Fig. 4 is a fragmentary view illustrating a portion of the stator according to the embodiment;
Fig. 5 is a perspective view illustrating coil-end portions on the opposite ends of the stator according to the embodiment;
Fig. 6 is a view viewed from a portion indicated by arrow VI in Fig. 5; and
Fig. 7 is a view viewed from a portion indicated by arrow VII in Fig. 5.

### DETAILED DESCRIPTION OF THE A PREFERRED EMBODIMENT

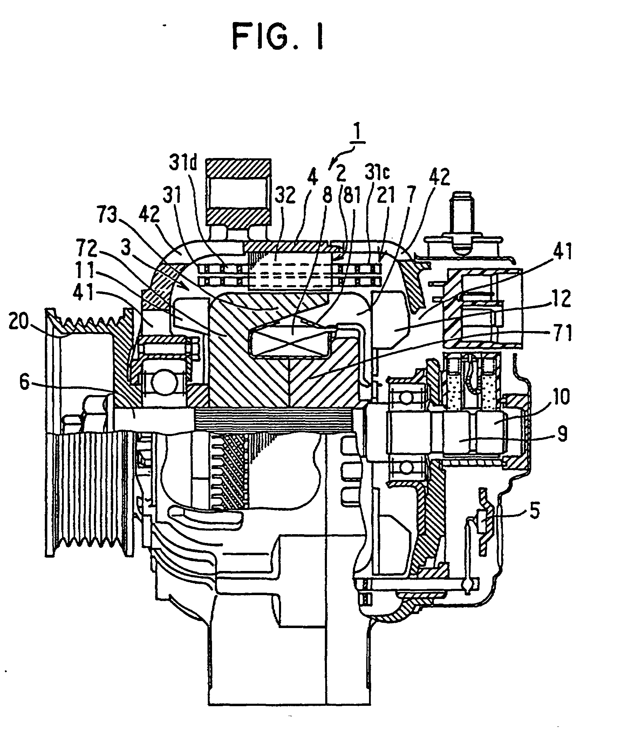

An alternator for a vehicle according to a preferred embodiment of the present invention is described with reference to Figs. 1-7.

Alternator 1 is mounted in an engine compartment of a vehicle and is composed of stator 2, rotor 3, frame 4 supporting stator 2 and rotor 3 and rectifier 5 converting ac power to dc power.

Rotor 3 is composed of pole core 7, field coil 8, slip rings 9, 10, mixed-flow type cooling fan 11 and centrifugal cooling fan 12. Shaft 6 is connected with pulley 20 and driven by an engine (not shown) mounted on a vehicle to rotate rotor 3. Pole core 7 is composed of a pair of core members. Pole core 7 has boss portion 71 fitted to shaft 6, desk portion 72 extending radially outward from boss portion 71 and a plurality of claw poles 73. Field coil 8 is held at a suitable pressure by the inner periphery of claw poles 73 via insulating member 81. Insulating member 81 is a resin-impregnated sheet, which is heated and bonded to field coil 8 to insulate field coil from pole core 7.

Mixed-flow fan 11 is fixed to the front end of disk portion 72 near pulley 20 and centrifugal fan 12 is fixed to the rear end of disk portion 72 respectively. Mixed-flow fan 11 has blades whose projected area (the area of the blade projected in the rotating direction) is smaller than the projected area of blades of centrifugal fan 12. The outside diameter of mixed-flow fan 11 is smaller than the outside diameter of centrifugal fan 12. The distance between mixed-flow fan 11 and the corresponding second coil-end group 31d is longer than the distance between centrifugal fan 12 and the corresponding first coil-end group 31c. The number of the blades of centrifugal fan 12 is not less than the number of mixed-flow fan 11. Frame 4 has air discharge windows 42 at portions corresponding to coil-end groups 31 of stator winding 21 and air intake windows 41 at the axially opposite ends thereof.

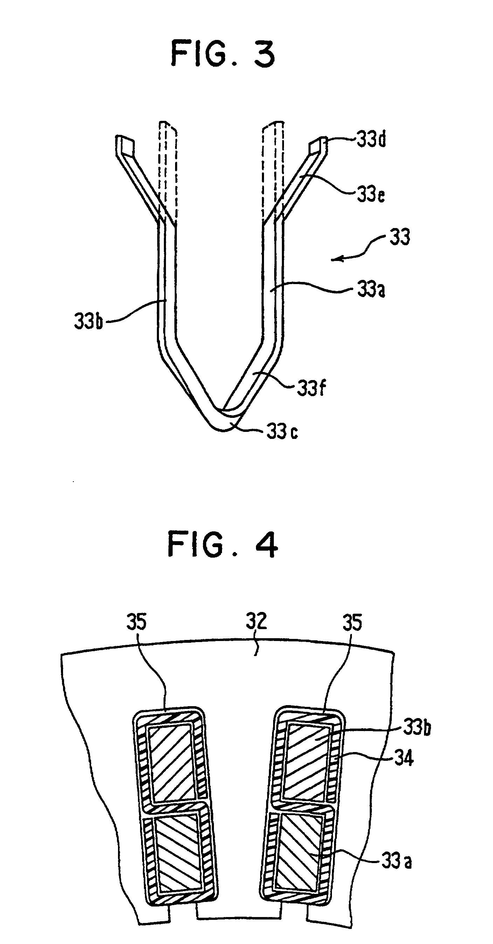

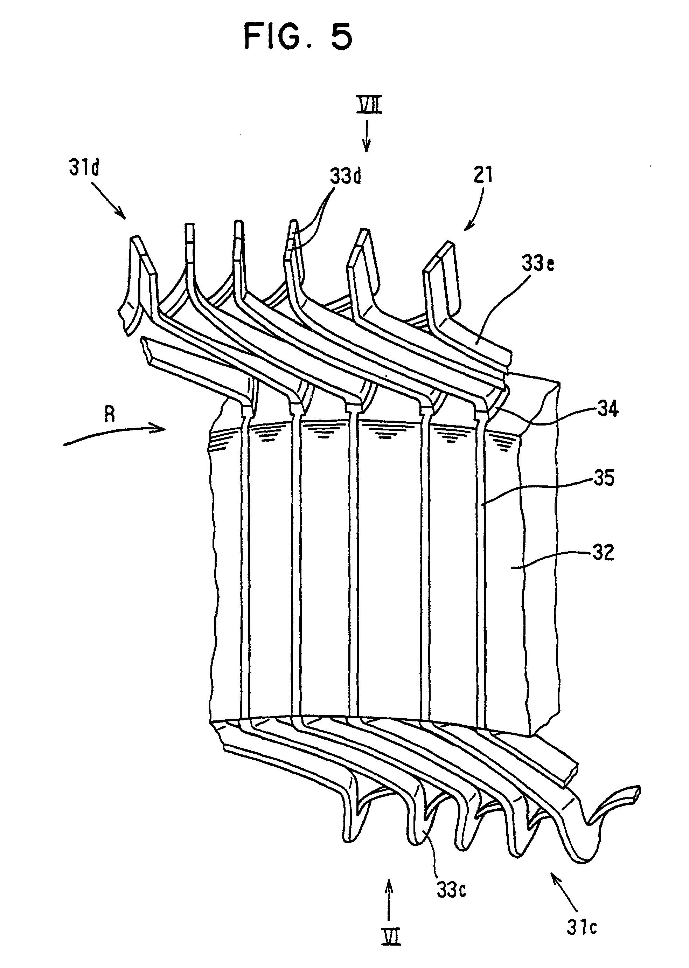

Stator 2 is supported by frame 4 and is composed of stator core 32, stator winding 21 formed from conductor segments 33 and insulator 34 for insulating conductor segments 33 from stator core 32. Stator core 32 is composed of laminated steel sheets and has a plurality of slots 35. Stator winding 21 is composed of U-shaped conductor segments 33 made of copper having a rectangular cross-section, as shown in Figs. 3 and 5. Conductor segments 33 are formed from copper plate by a press machine into a U-shape and inserted into slots 35 so that the opposite surfaces of conductors can be fitted to generally parallel walls of the slots via insulator 34. Each of conductor segments 33 is connected to corresponding one of conductor segments 33. Each of U-shaped conductor segments 33 has inner conductor 33a, outer conductor 33b, U-turn portion 33c, joint portion 33d and inclined portions 33e, 33f.

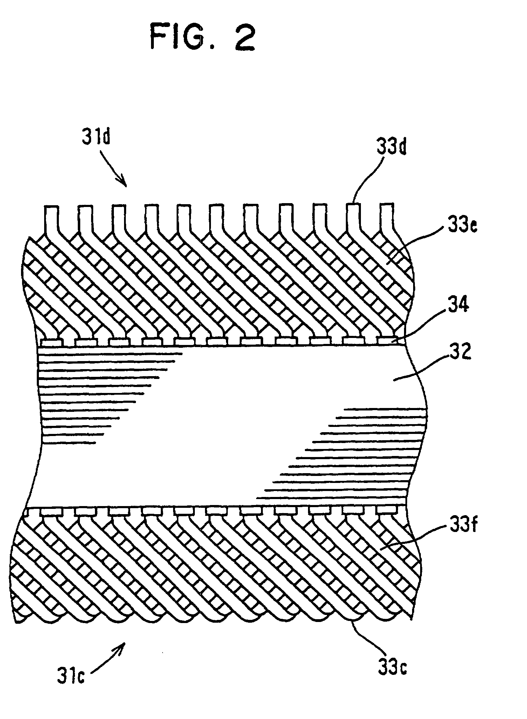

Conductor segments 33 are fixed to stator core 32 as follows: Each of U-turn portions 33c is disposed on the same axial end of stator core 32; each of outer conductors 33b is inserted into the rear side of one of slots 35; each of inner conductors 33a is inserted into the front side of one of slots 35; each of a pair of joint portions 33d is bent to be inclined outward; each of joint portions 33d in one of the front and rear sides of slots 35 is blazed or welded by a welder, such as ultrasonic welder or arc welder, to one of joint portions of conductor segment 33 in the other of the front and rear sides of slots 35 as shown in Fig. 2; and a pair of bare conductor segments 33 in both the front and rear sides of slots 35 are insulated by S-shaped insulator 34 as shown in Fig. 4.

As shown in Fig. 2, inclined portions 33e, 33f of conductor segment 33 are inclined in opposite directions at a certain angle so that a plurality of phase-windings can be disposed without interference. Thus, first coil-end group 31c is disposed on the side opposite the pulley 20 (rear side) and second coil-end group 31d is disposed on the side of pulley 20 (front side). Conductor segment 33 may be coated with insulating material.

Centrifugal fan 12 is rotated by rotor 3 to send air from air-intake windows 41 radially outward to first coil-end group 31c and discharged from air-discharge window 42 to the outside of frame 4.

On the other hand, mixed-flow fan 11 sends the air from air-intake windows 41 both in radially outward direction and axial direction to blow on both coil-end group 31d and field coil 8, and goes out of frame 4 from air discharge windows 42.

The outside diameter of centrifugal fan 12 is larger than the outside diameter of mixed-flow fan 11, and the quantity of cooling air sent to second coil-end group 31d by mixed-flow fan 11 is smaller than the quantity of the cooling air sent to first coil-end group 31c by centrifugal fan 12.

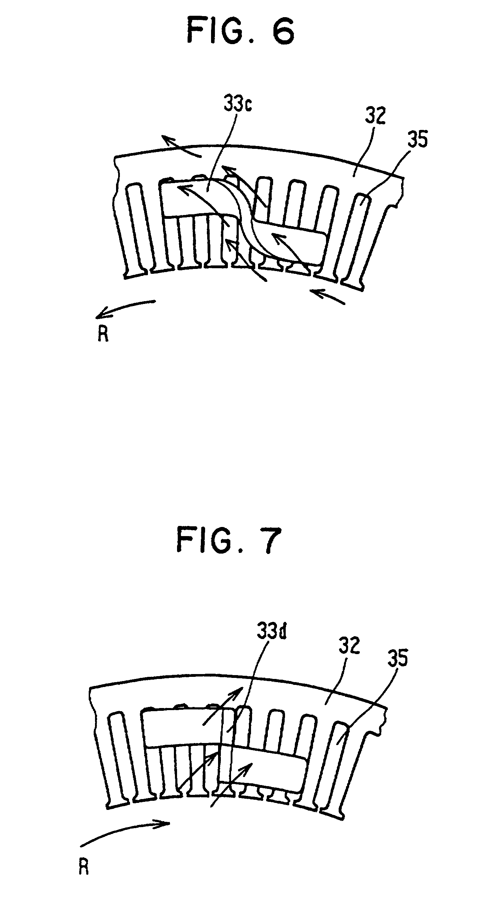

The cooling air flows along the inclined outer periphery of U-turn portion of first coil-end group 31c as shown in Fig. 6. On the other hand, the cooing air is blocked by joint portions 33d of second coil-end group 31d as shown in Fig. 7.

As stated above, the quantity of the cooling air sent to second coil-end group 31d is smaller than the quantity of the cooling air sent to first coil-end group 31c, and the speed of cooling air sent to second coil-end group 31d is lower than the speed of the cooling air sent to first coil-end group 31c. Thus, the interference noises on second coil-end group 31d can be reduced. As illustrated in Fig. 5, gaps are formed between adjacent inclined portions 33e of second coil-end group 31d so that the cooling air can pass through the gaps, thereby cooling second coil-end groups 31d effectively. Thus, the noise caused by the air blow on second coil-end group 31d is suppressed.

Because temperature of the air around pulley 20 and second coil-end group 31d (front side of the alternator) is lower than the temperature of the air around the rear side and first coil-end group 31c (rear side of the alternator) in the engine compartment, the above arrangement equalizes the temperature of first and second coil-end groups 31c, 31d effectively.

In the above embodiment, the shape, outside diameter, projected area of the blades, the number of the blades and the distance between the coil-end group and the cooling fan are differentiated from each other between the front side fan and rear side fan. However, it is not necessary to employ all the above features in order to reduce the noises of the cooling air. It is only necessary to make the quantity or the speed of the cooling air blowing on second coil-end group 31d lower than that on first coil-end group 31c.

One or both of cooling fans 11, 12 can be disposed outside the frame 4. Mixed-flow fan 11 can have only axial-flow blades or axial-and-centrifugal-mixed-flow blades.

In the foregoing description of the present invention, the invention has been disclosed with reference to specific embodiments thereof. It will, however, be evident that various modifications and changes may be made to the specific embodiments of the present invention without departing from the broader spirit and scope of the invention as set forth in the appended claims. Accordingly, the description of the present invention in this document is to be regarded in an illustrative, rather than restrictive, sense.

## Claims

1. An alternator (1) disposed in the engine compartment of a vehicle comprising a rotor (3) having magnetic poles (73) and a field coil (8), a cooling fan member (11, 12), a stator (2) disposed around said rotor (3) and having a stator core (32) and a multi-phase stator winding (21), wherein
said multi-phase stator winding (21) comprises plurality of conductor segments (33) each having a U-turn portion (33c) to form a first coil-end group (31c) and a pair of joint portions (33d) to form a second coil-end group (31d);
said first coil-end group (31c) is disposed on an end of said stator core (32) and said second coil-end group (31d) is disposed on said the other end; and
said cooling fan member (11, 12) sends cooling air to said second coil-end group (31d) less than said first coil-end group (31c).

2. An alternator (1) for a vehicle as claimed in claim 1, wherein
said cooling member comprises a first fan (12) for cooling said first coil-end group (31c) and a second fan (11) for cooling said second coil-end group (31d).

3. An alternator (1) for a vehicle as claimed in claim 2, wherein
said first fan (12) is disposed on an end of said rotor (3) corresponding to said first coil-end group (31c) and said second fan (11) is disposed on the other end of said rotor (3) corresponding to said second coil-end group (31d).

4. An alternator (1) for a vehicle as claimed in claim 3, wherein
outside diameter of said first fan (12) is larger than outside diameter of said second fan (11).

5. An alternator (1) for a vehicle as claimed in claim 3 or 4, wherein
the projected area of the blade of said first fan (12) is larger than the projected area of said second fan (11).

6. An alternator (1) for a vehicle as claimed in any one of claims 3-5, wherein
said first fan (12) is a centrifugal fan, and said second fan (11) is a mixed-flow fan.

7. An alternator (1) for a vehicle as claimed in any one of claims 3-6, wherein
the distance between said first fan (12) and said first coil-end group (31c) is shorter than the distance between said second fan (11) and said second coil-end group (31d).

8. An alternator (1) disposed near an internal combustion engine comprising a rotor (3) having magnetic poles (73) and a field coil (8), a cooling fan member (11, 12), a stator (2) disposed around said rotor (3) and having a stator core (32) and a multi-phase stator winding (21), wherein
said multi-phase stator (2) winding comprises plurality of conductor segments (33) each having a U-turn portion (33c) to form a first coil-end group (31c) and a pair of joint portions (33d) to form a second coil-end group (31d);
said first coil-end group (31c) is disposed on an end of said stator core (32) near said engine and said second coil-end group (31d) is disposed on the other end of said stator core (32); and
said cooling fan member (11, 12) comprises a mixed flow fan (11) for sending air to said second coil-end group (31d) and a centrifugal fan (12) for sending air to said first coil-end group (31c).

## Patentansprüche

1. Wechselstromgenerator (1), der im Motorraum eines Fahrzeugs angeordnet ist und einen Rotor (3) mit Magnetpolen (73) und einer Feldspule (8), ein Kühlgebläseelement (11, 12), einen um den Rotor (3) herum angeordneten Stator (2) mit einem Statorkern (32) und einer mehrphasigen Statorwicklung (21) aufweist, wobei
die mehrphasige Statorwicklung (21) eine Mehrzahl von Leitersegmenten (33) mit jeweils einem Umkehrabschnitt (33c) zum Bilden einer ersten Spulenendgruppe (31c) und einem Paar von Verbindungsabschnitten (33d) zum Bilden einer zweiten Spulenendgruppe (31d) aufweist;
die erste Spulenendgruppe (31c) an einem Ende des Statorkerns (32) angeordnet ist und die zweite Spulenendgruppe (31d) an dem anderen Ende angeordnet ist; und
das Kühlgebläseelement (11, 12) Kühlluft weniger an die zweite Spulenendgruppe (31d) als an die erste Spulenendgruppe (31c) fördert.

2. Wechselstromgenerator (1) für ein Fahrzeug nach Anspruch 1, wobei
das Kühlelement einen ersten Ventilator (12) zum Kühlen der ersten Spulenendgruppe (31c) und einen zweiten Ventilator (11) zum Kühlen der zweiten Spulenendgruppe (31d) aufweist.

3. Wechselstromgenerator (1) für ein Fahrzeug nach Anspruch 2, wobei
der erste Ventilator (12) an einem Ende des Rotors (3) angeordnet ist, das der ersten Spulenendgruppe (31c) entspricht, und der zweite Ventilator (11) am anderen Ende des Rotors (3) angeordnet ist, das der zweiten Spulenendgruppe (31d) entspricht.

4. Wechselstromgenerator (1) für ein Fahrzeug nach Anspruch 3, wobei
der Außendurchmesser des ersten Ventilators (12) gröβer als der Außendurchmesser des zweiten Ventilators (11) ist.

5. Wechselstromgenerator (1) für ein Fahrzeug nach Anspruch 3 oder 4, wobei
die Projektionsfläche der Schaufel des ersten Ventilators (12) größer als die Projektionsfläche der Schaufel des zweiten Ventilators (11) ist.

6. Wechselstromgenerator (1) für ein Fahrzeug nach einem der Ansprüche 3 bis 5, wobei
der erste Ventilator (12) ein Zentrifugalgebläse ist und der zweite Ventilator (11) ein Schraubenradgebläse ist.

7. Wechselstromgenerator (1) für ein Fahrzeug nach einem der Ansprüche 3 bis 6, wobei
der Abstand zwischen dem ersten Ventilator (12) und der ersten Spulenendgruppe (31c) geringer als der Abstand zwischen dem zweiten Ventilator (11) und der zweiten Spulenendgruppe (31d) ist.

8. Wechselstromgenerator (1), der in der Nähe einer Brennkraftmaschine angeordnet ist und einen Rotor (3) mit Magnetpolen (73) und einer Feldspule (8), ein Kühlgebläseelement (11, 12), einen um den Rotor (3) herum angeordneten Stator (2) mit einem Statorkern (32) und einer mehrphasigen Statorwicklung (21) aufweist, wobei
die mehrphasige Wicklung des Stators (2) eine Mehrzahl von Leitersegmenten (33) mit jeweils einem Umkehrabschnitt (33c) zum Bilden einer ersten Spulenendgruppe (31c) und einem Paar von Verbindungsabschnitten (33d) zum Bilden einer zweiten Spulenendgruppe (31d) aufweist;
die erste Spulenendgruppe (31c) an einem Ende des Statorkerns (32) in der Nähe der Brennkraftmaschine angeordnet ist und die zweite Spulenendgruppe (31d) an dem anderen Ende des Statorkerns (32) angeordnet ist; und
das Kühlgebläseelement (11, 12) ein Schraubenradgebläse (11) zum Fördern von Luft zur zweiten Spulenendgruppe (31d) und ein Zentrifugalgebläse (12) zum Fördern von Luft zur ersten Spulenendgruppe (31c) aufweist.

## Revendications

1. Alternateur (1) installé dans le compartiment d'un véhicule comprenant un rotor (3) possédant des pôles magnétiques (73) et une bobine de champ (8), un élément formant ventilateur de refroidissement (11, 12), un stator (2) installé autour dudit rotor (3) et possédant un noyau de stator (32) et un enroulement de stator multi phases (21), dans lequel
ledit enroulement de stator multi phases (21) comprend une pluralité de segments conducteurs (33) ayant chacun une partie en forme de U (33c) pour former un premier groupe d'extrémités de bobine (31c) et une paire de parties de liaison (33d) pour former un second groupe d'extrémités de bobine (31d) ;
ledit premier groupe d'extrémités de bobine (31c) est installé sur une extrémité dudit noyau de stator (32) et ledit second groupe d'extrémités de bobine (31d) est installé sur ladite autre extrémité ; et
ledit élément formant ventilateur de refroidissement (11, 12) envoie de l'air de refroidissement audit second groupe d'extrémités de bobine (31d) moins qu'audit premier groupe d'extrémités de bobine (31c).

2. Alternateur (1) destiné à un véhicule selon la revendication 1, dans lequel
ledit élément de refroidissement comprend un premier ventilateur (12) destiné à refroidir ledit premier groupe d'extrémités de bobine (31c) et un second ventilateur (11) destiné à refroidir ledit second groupe d'extrémités de bobine (31d),

3. Alternateur (1) destiné à un véhicule selon la revendication 2, dans lequel
ledit premier ventilateur (12) est installé à une extrémité dudit rotor (3) correspondant audit premier groupe d'extrémité de bobine (31c) et ledit second ventilateur (11) est installé sur l'autre extrémité dudit rotor (3) correspondant audit second groupe d'extrémité de bobine (31d).

4. Alternateur (1) destiné à un véhicule selon la revendication 3, dans lequel
le diamètre extérieur dudit premier ventilateur (12) est plus grand que le diamètre extérieur dudit second ventilateur (11).

5. Alternateur (1) destiné à un véhicule selon la revendication 3 ou 4, dans lequel
la surface de projection de la pale dudit premier ventilateur (12) est plus grande que la surface de projection dudit second ventilateur (11).

6. Alternateur (1) destiné à un véhicule selon l'une quelconque des revendications 3 à 5, dans lequel
ledit premier ventilateur (12) est un ventilateur centrifuge, et ledit second ventilateur (11) est un ventilateur à courants mélangés.

7. Alternateur (1) destiné à un véhicule selon l'une quelconque des revendications 3 à 6, dans lequel
la distance entre ledit premier ventilateur (12) et ledit premier groupe d'extrémités de bobine (31c) est plus courte que la distance entre ledit second ventilateur (11) et ledit second groupe d'extrémités de bobine (31d).

8. Alternateur (1) installé à proximité d'un moteur à combustion interne comprenant un rotor (3) possédant des pôles magnétiques (73) et une bobine de champ (8), un élément formant ventilateur de refroidissement (11, 12), un stator (2) installé autour dudit rotor (3) et possédant un noyau de stator (32) et un enroulement multi phases de stator (21), dans lequel
ledit enroulement multi phases de stator (2) comprend une pluralité de segments conducteurs (33) possédant chacun une partie en forme de U (33c) pour former un premier groupe d'extrémités de bobine (31c) et une paire de parties de liaison (33d) pour former un second groupe d'extrémités de bobine (31d) ;
ledit premier groupe d'extrémités de bobine (31c) est installé sur un extrémité dudit noyau de stator (32) à proximité dudit moteur et ledit second groupe d'extrémités de bobine (31d) est installé sur l'autre extrémités dudit noyau de stator (32) ; et
ledit élément formant ventilateur de refroidissement (11, 12) comprend un ventilateur à courants mélangés (11) destiné à envoyer de l'air audit second groupe d'extrémités de bobine (31d) et un ventilateur centrifuge (12) destiné à envoyer de l'air audit premier groupe d'extrémités de bobine (31c).
